# EUROPEAN PATENT SPECIFICATION

(11) **EP 0 580 259 B1**
(45) Date of publication and mention of the grant of the patent: **25.02.1998**
(21) Application number: 93202161.1
(22) Date of filing: 13.07.1993
(51) Int. Cl.: B23P 15/00, B29D 17/00, B29C 45/73

(54) **Method of manufacturing a moulding member and moulding member which can be manufactured by means of the method**
Verfahren zum Herstellen einer Formplatte und danach hergestellte Formplatten
Procédé de fabrication d'un partie de moule et partie de moule pouvant être fabriquée par la mise en oeuvre du procédé

(30) Priority: 20.07.1992 EP 92202204
(43) Date of publication of application: 26.01.1994
(73) Proprietor: Philips Electronics N.V., 5621 BA Eindhoven (NL)
(72) Inventor: Snoeyen, Anthonius Johannes Hendrikus, NL-5656 AA Eindhoven (NL)
(74) Representative: Cuppens, Hubertus Martinus Maria

(56) References cited:
- EP-A- 0 262 490
- US-A- 4 245 811
- US-A- 4 447 381

## Description

The invention relates to a method of manufacturing a moulding member comprising two at least substantially flat plates which contact one another with a contact surface each, at least one of the plates having a groove in the contact surface, which groove forms a cooling duct, in which method the plates are secured to one another. Such a method is used *inter alia* in injection-moulding apparatuses for the manufacture of optical information carriers such as, for example, Compact Discs.

A moulding member of the type defined in the opening sentence is known from US 4,185,955. Said document describes a mould having two mould sections which, if the mould sections are in contact with one another, bound a disc-shaped cavity for moulding an optical disc. Each mould section has a moulding member comprising two plates, grooves being provided in the contact surface of one of the plates to form cooling ducts for rapidly cooling the injection-moulded product and the moulding members after the injection-moulding process. The plates of a moulding member are secured to one another by means of bolts. To seal the cooling ducts O-rings are provided in grooves formed especially for this purpose in one of the plates. This method of joining the plates requires much space. The plates should have an adequate thickness to allow them to be provided with the required screwthread. The bolted joints are situated near the edges of the plates at some distance from the cooling ducts because the space available between the cooling ducts is not adequate and because seals in the form of O-rings have to be inserted between the cooling ducts and the bolted joints. In order to prevent the plates from being warped owing to the liquid pressure in the cooling ducts, as a result of which the wall of the cavity in which the product is moulded would no longer have the required flatness, the plates should have a specific thickness (rigidity). Owing to these requirements the moulding member is large, which also results in large dimensions of a mould, cooling ducts, liquid pumps, hydraulic cylinders for moving the moulding member, and other parts of an injection-moulding apparatus in which the mould with the moulding members is used.

US 4,447,381 (closest prior art) discloses an apparatus and method for making a video disc. The apparatus includes a pair of opposed mould members each provided with a stamper. Each of the mould members includes a base plate and a cap plate which contact one another with a contact surface. The base plates have grooves in their contact surfaces for providing a channel for the flow of a temperature control medium. It is mentioned that the cap plate is secured to the base plate by welding, brazing or the like. Further information about the method of manufacturing the mould members is missing.

It is an object of the invention to provide a method of manufacturing a moulding member which, for moulding the same product, can be smaller than the prior-art moulding member, so that the mould and the injection-moulding apparatus using the mould can also be of compact construction.

The method in accordance with the invention is characterised by the following steps of
- stress-relief annealing of the plates,
- electroplating the contact surfaces,
- introducing a solder between the contact surfaces while the same are in facing relationship,
- pressing the plates against one another while maintaining the contact surfaces in facing relationship,
- heating the plates and the solder to liquefy the solder, and
- cooling the plates to solidify the solder and secure the plates one to another at the contact surfaces.

By first stress-relief annealing the plates the plates do not warp during heating and cooling, so that an excellent joint is obtained. The soldered joint thus obtained also provides an effective sealing of the cooling ducts, so that no O-rings are required, which saves space. Since the plates are secured to one another over a large area and the joint extends up to the cooling ducts the moulding member has a higher rigidity so that it is possible to use plates which are thinner than in the prior-art moulding member. Since the plates are thinner the cooling ducts can also be smaller because the volume to be cooled is smaller. As a result of this, the mould, the liquid pumps, hydraulic cylinders for moving the mould, and other parts of an injection-moulding apparatus in which the mould with the moulding members is used can be of compact construction.

An embodiment of the method in accordance with the invention is characterised in that during soldering the plates are also hardened. In order to meet the requirements imposed on the plates of the mould the plates must be hardened. When hardening and soldering are effected in one operation time is saved and the plates need not be subjected to any intermediate operations after hardening and before soldering.

An embodiment of the method in accordance with the invention is characterised in that cooling is effected by first cooling the plates to a first temperature in a vacuum furnace and then cooling the plates to a second temperature in air. During cooling to the first temperature the solder solidifies and no reactions with gases are allowed. Therefore, the first cooling cycle is performed in a vacuum furnace. Subsequently, the plates are cooled further, which causes a change of structure which hardens the plates.

A suitable electroplating method is nickel-plating of the contact surfaces. Electroplating of the contact surfaces before soldering yields a proper joint, which precludes embrittling of the plates.

The invention also relates to a moulding member which can be manufactured by means of the method in accordance with the invention, said member comprising two at least substantially flat plates which are secured to one another and which each contact one another with a contact surface, at least one of the plates having a groove in the contact surface, which groove forms a cooling duct. The moulding member in accordance with the invention is characterised in that the plates are secured to one another by means of a soldered joint.

During cooling the temperature at the plate surface bounding the cavity for moulding the optical disc should be substantially uniform over the entire area. If the temperature at the surface is not uniform some parts of the optical disc will cool more rapidly than other parts, which may give rise to colour differences in the disc. In order to obtain a uniform temperature at the surface of the plate the thickness of the plate between this surface and the cooling ducts must have a minimal thickness. Otherwise the surface near a cooling duct will have a lower temperature than a surface remoter from a cooling duct. In order to minimise this thickness of the plate the moulding member in accordance with the invention is characterised in that a wall of the cooling duct is provided with projections and/or a wall of the cooling duct is provided with recesses. In operation this gives rise to a turbulent liquid flow in the cooling ducts, which provides a better cooling than in the case of a laminar liquid flow and the temperature equalizes sooner than in the case of a laminar liquid flow, so that the thickness of the plate can be reduced.

The invention will now be described in more detail, by way of example, with reference to the drawings. In the drawings:
Figure 1 is a sectional view of a mould comprising moulding members in accordance with the invention,
Figure 2 is a sectional view of two interconnected plates of a moulding member, and
Figure 3 is a longitudinal sectional view of a cooling duct formed in a moulding member.

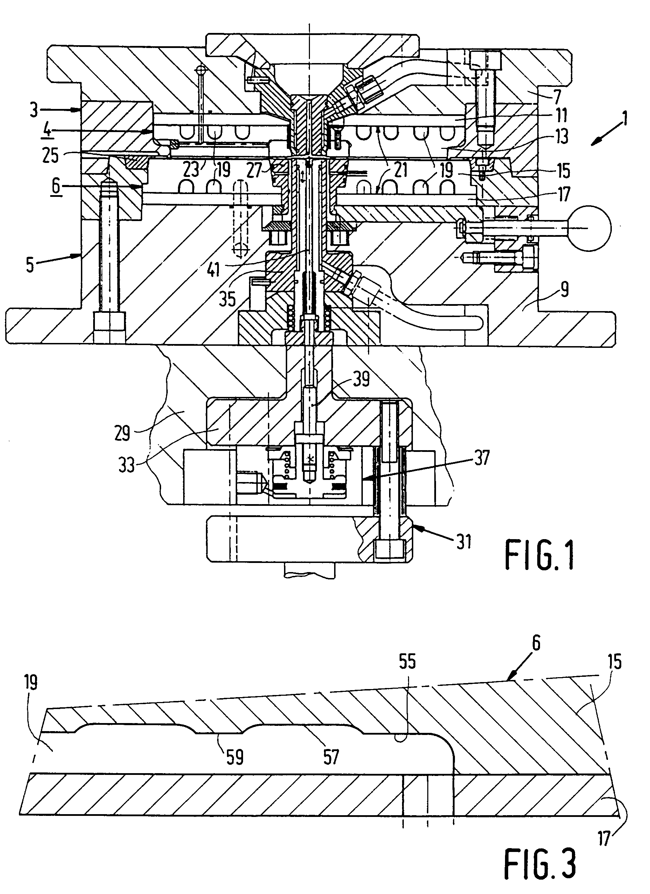

Figure 1 shows a mould 1 comprising a first and a second mould section 3, 5. The mould sections each comprise a rear part 7, 9 carrying a first moulding member 4 and a second moulding member 6 respectively. Each moulding member 4, 6 comprises two plates 11, 13, 15, 17 secured to one another. One of the plates has a groove 19, which after the two plates have been secured to one another forms a cooling duct for cooling the product to be moulded. The plates 11, 13, 15, 17 are secured to one another by means of a soldered joint 21. In comparison with the customary fixing method by means of bolts, using an O-ring for sealing the cooling duct, this soldered joint has the advantage that it also provides sealing of the cooling ducts and that the plates to be interconnected can be thinner because no material for screwthread has to be provided. The plate 15 of the second moulding member 6 carries a shell 23, which is clamped in position by means of a clamping ring 25 and a clamping bush 27. This shell 23 has a profile representing information. This profile is formed in the product during moulding of a product. The plate 13 of the first moulding member 4 facing the shell has a smooth surface because the product is provided with information at one side only.

The second mould section 5 is carried by a base 29 of an injection-moulding apparatus. This base 29 comprises a first mechanism 31 for effecting a punch movement. This mechanism 31 comprises a movable piston 33. This punch movement is followed by a punch 35 provided in the second mould section 5 in order to sever a sprue slug from the product. The base 29 further comprises a second mechanism 37 for effecting an ejection movement. This second mechanism 37 comprises a further piston 39, which can be moved hydraulically or pneumatically. This further piston 39 is situated in the first-mentioned piston 33. Said ejection movement is followed by an ejector 41 provided in the second mould section 5 in order to eject a sprue slug from the punch 35.

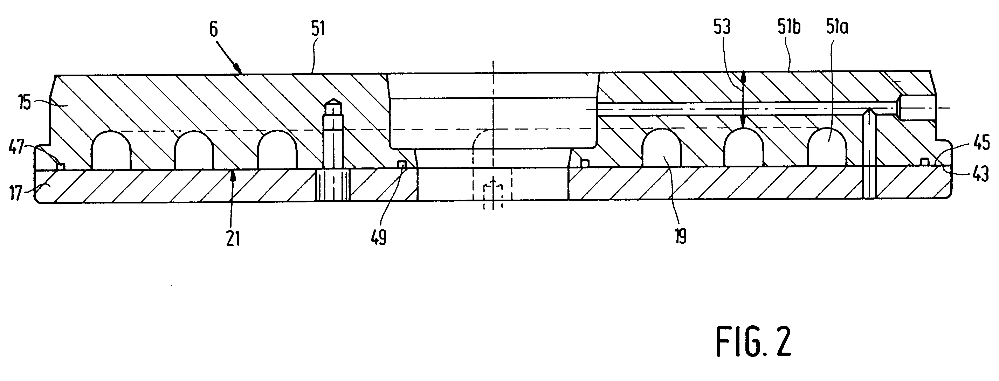

Figure 2 shows the two plates 15, 17 of the second moulding member 6. The plates should be made of an air-hardening die steel in order to enable the plates to be hardened during soldering. A suitable material is for example X40Cr13. Before the plates are hardened and secured to one another they are first subjected to stress-relief annealing in order to remove internal stresses in the plates. During heating in the hardening and soldering process such internal stresses could give rise to warping of the plates. Subsequently, the plates are pre-treated, *inter alia* planed. This is because the plates may be slightly warped during stress-relief annealing. For soldering stringent requirements are imposed on the flatness of the plate surfaces to be joined. Before the plates are soldered to one another the contact surfaces 43 and 45 to be secured to one another are electroplated. This provides an improved solder joint and the plates become less brittle near the contact surfaces upon soldering. A suitable electroplating method is nickel-plating. After this the solder is applied, a soldering wire being inserted into grooves 47, 49 provided for this purpose in the plate 15 and a soldering foil being interposed between the contact surfaces 43 and 45. The solder material should be selected in such a manner that the solder is liquid at the temperature required for hardening the plates. For the soldering wire it is possible to select, for example, a copper alloy, nickel alloy or silver alloy. A suitable copper alloy is for example CuSn6. The soldering foil may be, for example, a bronze foil cut to size. Soldering is effected in a vacuum furnace at a temperature of approximately 1050 °C. During soldering the plates are clamped against one another by a clamping device. During soldering the plates are also hardened. For the purpose of hardening the plates are cooled in a controlled manner. This is effected by first cooling the plates in a vacuum furnace to a first temperature of approximately 880 °C at which the solder solidifies, no reactions with ambient gases being allowed. Subsequently, the plates are further cooled in air to a second temperature of approximately 50 °C, which gives rise to a change of structure whereby the plates are hardened. The final structure of the plates is the martensite structure. Cooling in air is followed by tempering, the moulding member being maintained at 520 °C for approximately one hour.

During cooling of the optical disc the temperature at the surface 51 of the plate 15, which surface bounds the cavity for moulding the optical disc, should be substantially uniform over the entire area. If the temperature at the surface is not uniform some parts of the optical disc will cool more rapidly than other parts, which may give rise to colour differences in the disc. These colour differences render the optical disc useless owing to the influence on the reflection of a light beam. In order to obtain a uniform temperature at the surface 51 of the plate 15 the distance 53 between this surface 51 and the cooling ducts 19 must have a minimal value. If the plate 15 is too thin a part 51a of the surface 51 near a cooling duct 19 will have a lower temperature than a part 51b of the surface 51 which is remoter from a cooling duct 19. In order to minimise this distance 53 and hence the thickness of the plate the a wall 55 of the cooling duct 19 is provided with recesses 57, see Figure 3. Conversely, the wall 55 of the cooling duct 19 may be regarded as a wall provided with projections 59 instead of a wall provided with recesses. In operation these recesses 57 give rise to a turbulent liquid flow in the cooling ducts 19, which provides a better cooling than in the case of a laminar liquid flow and the temperature equalizes sooner than in the case of a laminar liquid flow, so that the plate can be thinner.

It is to be noted that the plates 11 and 13 of the first moulding member 4 may also be secured to one another by the method described above.

Although the invention has been described with reference to the drawings this does not imply that the invention is limited to the embodiment shown in the drawings. The invention likewise relates to all embodiments which deviate from those shown in the drawings within the scope defined by the Claims.

## Claims

1. A method of manufacturing a moulding member (4; 6) comprising two at least substantially flat plates (11, 13; 15, 17) which contact one another with a contact surface (43, 45) each, at least one of the plates (13; 15) having a groove (19) in the contact surface for forming a cooling duct, in which method the plates are secured to one another, characterized by the following steps of
- stress-relief annealing of the plates (11, 13; 15, 17),
- electroplating the contact surfaces (43, 45),
- introducing a solder between the contact surfaces while the same are in facing relationship,
- pressing the plates against one another while maintaining the contact surfaces in facing relationship,
- heating the plates and the solder to liquefy the solder, and
- cooling the plates to solidify the solder and secure the plates one to another at the contact surfaces.

2. A method as claimed in Claim 1, characterised in that during soldering the plates (11, 13; 15, 17) are also hardened.

3. A method as claimed in Claim 1 or 2, characterised in that cooling is effected by first cooling the plates (11, 13; 15, 17) to a first temperature in a vacuum furnace and then cooling the plates to a second temperature in air.

4. A method as claimed in Claim 1, 2 or 3, characterised in that electroplating is effected by nickel-plating the contact surfaces (43, 45).

## Patentansprüche

1. Verfahren zum Herstellen eines Formteils (4; 6) mit zwei wenigstens nahezu flachen Formplatten (11, 13; 15, 17), die mit je einer Kontaktfläche (43, 45) miteinander in Kontakt sind, wobei in wenigstens einer der Platten (13; 15) in der Kontaktfläche eine Rille (19) vorgesehen ist, die einen Kühlkanal bildet, wobei bei diesem Verfahren die Platten miteinander verbunden werden, gekennzeichnet durch die nachfolgenden Verfahrensschritte:
- das spannungsfreie Glühen der Platten (11, 13; 15,17),
- das Elektroplattieren der Kontaktflächen (43, 45),
- das Anbringen von Zinnlot zwischen den einander zugewandten Kontaktflächen,
- das Gegeneinanderdrücken der Platten mit einander zugewandten Kontaktflächen,
- das Erhitzen der Platten und des Zinnlots, damit letzteres zum Schmelzen gelangt,
- das Abkühlen der Platten zum Aushärten des Zinnlots und zum Heften der Platten aneinander, und zwar an den Kontaktflächen.

2. Verfahren nach Anspruch 1, dadurch gekennzeichnet, daß beim Verlöten die Platten (11, 13; 15, 17) ebenfalls gehärtet werden.

3. Verfahren nach Anspruch 1 oder 2, dadurch gekennzeichnet, daß Kühlung dadurch herbeigeführt wird, daß zunächst die Platten (11, 13; 15, 17) in einem Vaküumofen auf eine erste Temperatur abgekühlt werden und daß danach die Platten an der Luft auf eine zweite Temperatur abgekühlt werden.

4. Verfahren nach Anspruch 1, 2 oder 3, dadurch gekennzeichnet, daß Elektroplattierung durch Vernicklung der Kontaktflächen (43, 45) herbeigeführt wird.

## Revendications

1. Procédé pour fabriquer une partie de moule (4; 6) comportant deux plaques au moins sensiblement planes (11, 13; 15, 17) qui sont chacune en contact l'une avec l'autre avec une surface de contact (43, 45), au moins l'une des plaques (13; 15) présentant une rainure (19) pratiquée dans la surface de contact pour constituer un canal de refroidissement, procédé suivant lequel les plaques sont fixées l'une à l'autre, caractérisé par les étapes suivantes:
- le recuit d'élimination de contraintes des plaques (11, 13; 15, 17),
- la métallisation électrolytique des surfaces de contact (43, 45),
- l'introduction d'une soudure entre les surfaces de contact alors que celles-ci sont disposées l'une vis-à-vis de l'autre,
- le serrage des plaques l'une contre l'autre alors que les surfaces de contact sont maintenues l'une en face de l'autre,
- le chauffage des plaques et de la soudure pour liquéfier la soudure, et
- le refroidissement des plaques pour solidifier la soudure et pour fixer les plaques l'une à l'autre à l'endroit des surfaces de contact.

2. Procédé selon la revendication 1, caractérisé en ce que lors du soudage les plaques (11, 13; 15, 17) sont également durcies.

3. Procédé selon la revendication 1 ou 2, caractérisé en ce que l'on réalise le refroidissement en refroidissant d'abord les plaques (11, 13; 15, 17) jusqu'à une première température dans un four à vide et en refroidissant alors dans l'air les plaques jusqu'à une deuxième température.

4. Procédé selon la revendication 1, 2 ou 3, caractérisé en ce que la métallisation électrolytique est effectuée par le nickelage des surfaces de contact (43, 45).
